# FASCICULE DE BREVET EUROPEEN

(11) **EP 1 853 876 B1**
(45) Date de publication et mention de la délivrance du brevet: **14.05.2008**
(21) Numéro de dépôt: 06709354.2
(22) Date de dépôt: 21.02.2006
(51) Int. Cl.: G01B 11/06, B64D 15/20

(54) **SONDE POUR LA MESURE DE L'ÉPAISSEUR D'UN DÉPÔT DE GIVRE SUR UNE SURFACE**
FÜHLER ZUM MESSEN DER DICKE DER FROSTABLAGERUNG AUF EINER OBERFLÄCHE
PROBE FOR MEASURING THE THICKNESS OF FROST ACCRETION ON A SURFACE

(30) Priorité: 28.02.2005 FR 0501988
(43) Date de publication de la demande: 14.11.2007
(73) Titulaire: AIRBUS France, 31060 Toulouse Cédex (FR)
(72) Inventeur: ROQUES, Sandrine, F-31320 Rebigue (FR)
(74) Mandataire: Hauer, Bernard
(86) Numéro de dépôt international: PCT/FR2006/000388
(87) Numéro de publication internationale: WO 2006/092478

(56) Documents cités:
- EP-A- 1 466 827
- DE-A1- 2 936 201
- US-A- 5 484 121
- US-B1- 6 425 286

## Description

La présente invention concerne une sonde optique et un dispositif comportant une pluralité de telles sondes optiques pour la mesure de l'épaisseur d'une accrétion de givre sur une surface, notamment une surface aérodynamique d'aéronef (aile, empennage, etc ...).

On sait que, lors de conditions météorologiques particulières, il peut se former des accrétions de givre sur les surfaces aérodynamiques d'un aéronef en vol, ce qui, d'une part, modifie le profil aérodynamique et donc les caractéristiques aérodynamiques desdites surfaces et, d'autre part, alourdit ledit aéronef et en modifie le centrage. De telles accrétions de givre peuvent donc rendre l'aéronef incontrôlable et en entraîner la chute.

Afin d'étudier les conditions météorologiques de formation de givre et, ainsi, anticiper les accrétions de givre sur les surfaces aérodynamiques d'un aéronef et éviter leurs conséquences, on mène des campagnes d'essais en vol spécifiques. Ces essais ont pour but d'améliorer les connaissances sur les formes des accrétions naturelles de givre susceptibles de se déposer afin de valider des modèles déjà existants, dans le cadre de la procédure de certification des aéronefs. Ils permettent, ainsi, de définir les formes des accrétions, d'en mesurer les épaisseurs et les étendues notamment autour du profil des surfaces aérodynamiques et de déterminer l'état dudit profil.

En ce qui concerne la seule mesure de l'épaisseur des accrétions de givre, on connaît déjà de nombreuses sondes, dont les fonctionnements mettent en oeuvre des principes physiques tels que l'induction électrique et la propagation des ultrasons, des micro-ondes et des faisceaux lumineux dans le givre.

Par exemple, le document US-6 425 286 décrit une sonde électro-optique de détection de givre. Cette sonde comporte une base pour la fixer sur une surface de l'avion en contact avec l'écoulement aérodynamique, ainsi qu'un boîtier oblong, orthogonal à ladite base et pourvu d'une cavité dans laquelle du givre peut s'accumuler. Un faisceau lumineux traverse la cavité et un capteur permet de détecter ou non la présence dudit faisceau. En cas de givre, celui-ci obstrue la cavité de sorte que le faisceau lumineux ne peut être détecté par le capteur. Cette sonde comporte en outre un dispositif de réchauffage pour faire fondre le givre accumulé dans la cavité. En comptant le nombre de cycles de réchauffage, la sonde peut évaluer la quantité totale de givre formé.

Quel que soit le principe physique sur lequel est basé le fonctionnement de ces sondes connues, l'expérience montre que ces dernières ne peuvent mesurer que des épaisseurs de givre limitées et, parfois, avec une faible précision.

L'un des objets de la présente invention est de remédier à cet inconvénient et concerne une sonde optique apte à mesurer avec précision des épaisseurs de givre importantes (par exemple une dizaine de centimètres).

A cette fin, selon l'invention, la sonde pour mesurer l'épaisseur d'une accrétion de givre sur une surface, notamment une surface aérodynamique d'aéronef, ladite sonde étant pourvue d'une base apte à être appliquée sur ladite surface, est remarquable :
- en ce qu'elle comporte une pluralité d'étages de mesure superposés au moins sensiblement orthogonalement à ladite base ; et
- en ce que chaque étage de mesure comporte :
   ■ au moins un émetteur apte à émettre un faisceau lumineux au moins sensiblement parallèle à ladite base, et
   ■ au moins un récepteur apte à recevoir ledit faisceau lumineux après réflexion sur ledit givre.

Ainsi, l'épaisseur du givre recouvrant ladite surface correspond à la distance séparant ladite base et le dernier étage dont le récepteur reçoit le faisceau lumineux émis par l'émetteur associé, la résolution de la mesure correspondant à la distance séparant ce dernier étage et le premier étage dont le récepteur ne reçoit pas le faisceau lumineux émis par l'émetteur associé. On obtient ainsi une échelle de mesure de l'épaisseur de givre.

Avantageusement, chaque émetteur est du type diode électroluminescente, alors que-chaque récepteur est du type photodiode.

De préférence, la sonde conforme à la présente invention comporte un boîtier, qui est solidaire de ladite base et qui enferme ladite pluralité d'étages de mesure superposés, et, au niveau de chacun desdits étages de mesure, ledit boîtier est pourvu d'une fenêtre transparente pour ledit faisceau lumineux. La pluralité desdites fenêtres peut être formée par un hublot commun à tous les étages de mesure.

Dans un mode de réalisation avantageux, la sonde conforme à la présente invention comporte des moyens de chauffage aptes à faire fondre superficiellement l'accrétion de givre, au moins au voisinage desdites fenêtres et, de préférence, tout autour de ladite sonde. Ainsi, ladite sonde est désolidarisée de l'accrétion de givre, ce qui évite les efforts mécaniques exercés par l'accrétion sur la sonde, le risque de modification du dépôt de givre par la sonde et le risque de variation du point de convergence émetteur-récepteur de chaque étage.

Afin de perturber le moins possible l'écoulement de l'air au voisinage de la sonde pendant le vol de l'aéronef, il est avantageux que ledit boîtier présente une forme oblongue. Ainsi, la formation de l'accrétion de givre n'est pas perturbée et les mesures sont fiables. On remarquera que lesdits moyens de chauffage permettent d'éviter l'augmentation de la traînée de la sonde, ce qui serait le cas si celle-ci givrait dans son ensemble.

Par ailleurs, on remarquera également que, aussi bien les sondes connues mentionnées ci-dessus que la sonde conforme à la présente invention ne délivrent que des mesures d'épaisseur ponctuelles, ce qui est insuffisant pour étudier dans son ensemble le profil d'une accrétion de givre sur ladite surface.

Pour résoudre ce problème, la technique antérieure met généralement en oeuvre une plaque fixée orthogonalement à ladite surface et portant une échelle de mesure de longueur. Cette plaque, qui peut présenter la forme d'une portion de couronne lorsqu'elle est fixée sur un bord d'attaque, est observée en vol par une caméra qui est disposée à bord de l'aéronef et qui indique ainsi l'épaisseur de givre accumulée le long de ladite plaque. Cependant, à cause de l'éloignement de la caméra et de l'observation de la plaque par celle-ci à travers un hublot de l'aéronef, la mesure ne peut être bonne. De plus, un tel dispositif de mesure est sensible aux vibrations, ce qui nuit à la qualité des images -dont la résolution est mauvaise- et donc de la mesure.

Aussi, un autre objet de la présente invention est de remédier à ce dernier problème.

A cette fin, la présente invention concerne un dispositif permettant de déterminer l'épaisseur d'une accrétion de givre sur une surface, ce dispositif étant remarquable en ce qu'il comporte une pluralité de sondes selon l'invention réparties sur ladite surface.

Lorsque ladite surface est une surface aérodynamique soumise à un écoulement aérodynamique, il est avantageux de diriger les fenêtres desdites sondes transversalement audit écoulement aérodynamique. On évite ainsi de fausser les mesures par les phénomènes de vague et de creux de givre qui se forment respectivement à l'avant et à l'arrière de la sonde.

De préférence, ledit dispositif comporte au moins un ensemble de sondes disposées dans l'écoulement aérodynamique (en alignement ou en décalage pour éviter le masquage d'une sonde par une autre) et cet ensemble entoure le bord d'attaque de la surface aérodynamique.

Bien entendu, les sondes peuvent être fixées directement sur la surface sur laquelle on veut mesurer l'épaisseur de givre. Toutefois, notamment lorsque l'on désire ne pas détériorer ladite surface, il est avantageux de fixer lesdites sondes sur un support collé de façon temporaire à ladite surface, en étant parallèle à celle-ci et en ménageant un espace intermédiaire avec elle. Un tel support est par exemple décrit dans le document US-A-5 874 671.

Les figures du dessin annexé feront bien comprendre comment l'invention peut être réalisée. Sur ces figures, des références identiques désignent des éléments semblables.

La figure 1 est une vue en perspective d'une sonde optique conforme à la présente invention, vue du côté de son hublot.

La figure 2 est une coupe axiale agrandie, mais partielle, de la sonde de la figure 1, ladite coupe passant par ledit hublot et correspondant à la ligne II-II de la figure 3.

La figure 3 est une coupe transversale agrandie de la sonde de la figure 1, ladite coupe correspondant à la ligne III-III de la figure 2.

La figure 4 illustre le principe de mesure de la sonde optique conforme à la présente invention.

La figure 5 montre, en plan, un exemple de dispositif comportant une pluralité de sondes.

La figure 6 est une vue, de profil, du dispositif de la figure 5.

La figure 7 montre un dispositif selon l'invention entourant le bord d'attaque d'une surface aérodynamique.

La figure 8 est une vue en plan correspondant à la figure 7.

La figure 9 illustre un support temporaire pour la fixation des sondes du dispositif selon l'invention.

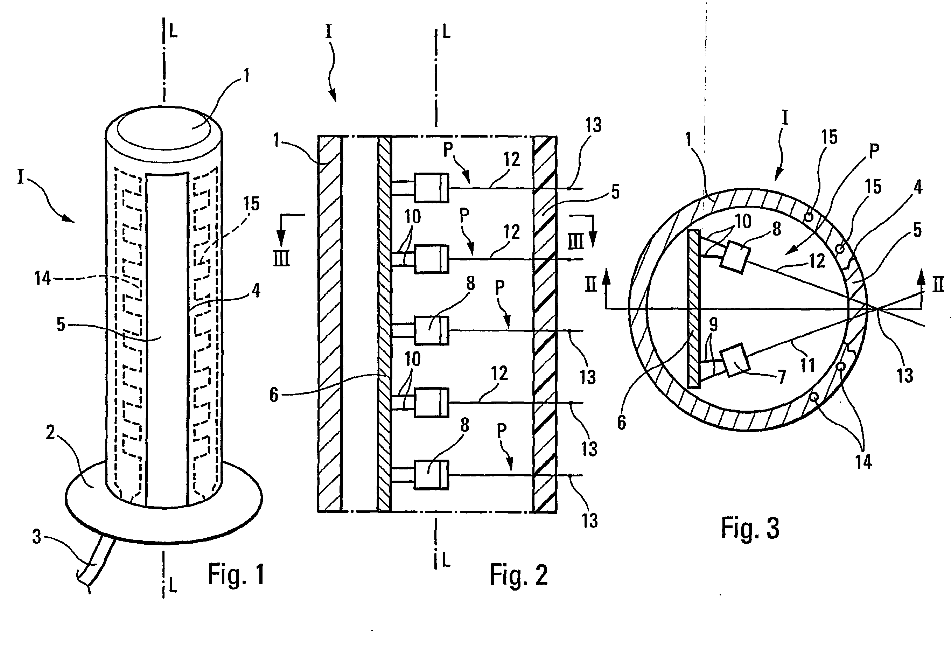

La sonde I, représentée sur la figure 1 à titre d'exemple de réalisation de la présente invention, comporte un boîtier oblong 1, par exemple cylindrique, allongé le long d'un axe L-L. A l'une de ses extrémités, la sonde I comporte une base 2 orthogonale à l'axe L-L. Au moins un câble électrique 3, passant à travers la base 2, permet la liaison électrique de la sonde I avec l'extérieur.

Une partie de la paroi latérale du boîtier 1 est pourvue d'une ouverture longitudinale 4, obturée par un hublot longitudinal 5, transparent aux rayonnements rouges ou proche infrarouges.

A l'intérieur du boîtier oblong 1 est disposée, longitudinalement, une plaquette de circuit imprimé 6, reliée électriquement à un câble 3 et fixée de toute manière appropriée à l'intérieur dudit boîtier, en regard dudit hublot 5.

La plaquette de circuit imprimé 6 porte une pluralité de paires d'émetteurs optiques 7 et de récepteurs optiques 8, réparties le long de l'axe L-L. Les émetteurs 7 et les récepteurs 8 sont fixés à la plaquette de circuit imprimé 6, respectivement par leurs pattes 9 ou 10. Dans chaque paire émetteur 7 - récepteur 8, l'axe optique 11 de l'émetteur 7 traverse le hublot 5 et coupe l'axe optique 12 du récepteur 8 correspondant -qui traverse également ledit hublot 5- en un point de convergence 13 se trouvant du côté extérieur dudit hublot 5.

Les émetteurs optiques 7 sont des diodes électroluminescentes émettant dans le rouge ou le proche infrarouge. Les récepteurs optiques 8 sont des photodiodes sensibles aux mêmes rayonnements.

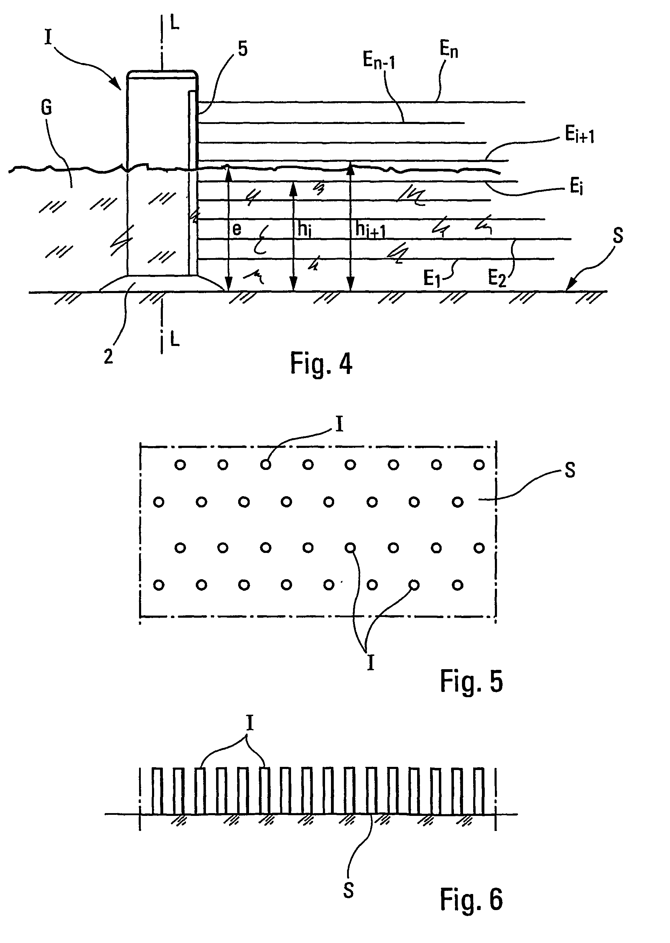

Les plans P définis par chaque axe 11 et par chaque axe 12 correspondant sont parallèles les uns aux autres et, de préférence, équidistants les uns des autres. Ainsi, chaque paire émetteur 7 - récepteur 8 forme un étage de mesure, lesdits étages de mesure E1 à En (avec n = nombre entier au moins égal à 2) étant échelonnés le long de l'axe L-L, c'est-à-dire qu'ils sont superposés au moins sensiblement orthogonalement à la base 2 (voir la figure 4).

Par ailleurs, la sonde I comporte des résistances électriques chauffantes 14 et 15 pouvant être alimentées en courant par l'intermédiaire d'un câble 3.

Comme le montre la figure 4, lorsqu'une accrétion de givre G se forme sur une surface S, sur laquelle une sonde I est fixée ou appliquée par sa base 2, les récepteurs 8 des étages de mesure se trouvant sous le givre (les étages E1 à Ei dans l'exemple représenté, avec i = nombre entier au plus égal à n) reçoivent par réflexion sur ledit givre le faisceau lumineux émis par les émetteurs respectifs 7 et émettent un signal correspondant, alors que les récepteurs 8 des étages de mesure se trouvant au-dessus du givre (les étages Ei + 1 à En dans le présent exemple) ne peuvent recevoir le faisceau émis par leur émetteur 7 associé et restent donc passifs.

Il est donc aisé de déterminer l'épaisseur e de l'accrétion de givre G, cette épaisseur étant supérieure à la hauteur hi du dernier étage Ei dont le récepteur 8 reçoit le faisceau lumineux de l'émetteur 7 associé, mais inférieure à la hauteur hi + 1 du premier étage Ei + 1 dont le récepteur 8 ne reçoit pas le faisceau lumineux émis par l'émetteur 7 associé.

Pendant la mesure, les résistances chauffantes 14, 15 permettent de faire fondre superficiellement le givre autour de la sonde I.

Comme montré par les figures 5 et 6, on peut utiliser une pluralité de sondes I réparties sur la surface S pour mesurer l'épaisseur de l'accrétion de givre G en une pluralité d'emplacements de ladite surface S. Il est ainsi possible de déterminer la forme exacte de cette accrétion sur la surface S.

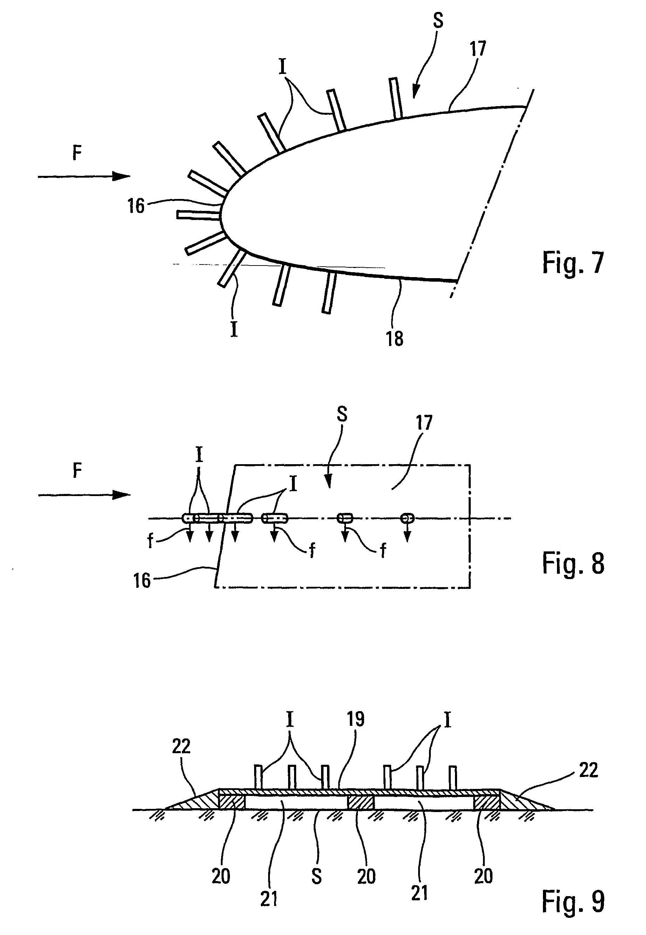

Dans le dispositif des figures 7 et 8, la surface S est une portion de surface aérodynamique comportant un bord d'attaque 16 reliant un extrados 17 à un intrados 18. Les sondes I sont disposées autour du bord d'attaque 16, depuis l'extrados 17 jusqu'à l'intrados 18. La surface aérodynamique S est soumise à un écoulement aérodynamique, symbolisé par une flèche F, et lesdites sondes I sont disposées dans cet écoulement aérodynamique. De préférence, comme indiqué ci-dessus, les hublots 5 desdites sondes I sont dirigées transversalement audit écoulement aérodynamique, ce qui est symbolisé par les flèches f sur la figure 8.

Dans les exemples des figures 4 à 8, les sondes I sont supposées être fixées sur la surface S directement. Sur la figure 9, les sondes I sont fixées sur un support temporaire 19, lui-même collé sur la surface S au moyen de tampons adhésifs 20, ménageant des espaces intermédiaires 21 entre le support 19 et la surface S, utiles pour le passage des câbles électriques 3. A la périphérie du support 19, on peut prévoir des transitions progressives 22 entre ce dernier et la surface S.

## Revendications

1. Sonde pour mesurer l'épaisseur d'une accrétion de givre (G) sur une surface (S), notamment une surface aérodynamique d'aéronef, ladite sonde étant pourvue d'une base (2) apte à être appliquée sur ladite surface (S),
**caractérisée :**
- **en ce qu'**elle comporte une pluralité d'étages de mesure (E1 à En) superposés au moins sensiblement orthogonalement à ladite base (2) ; et
- **en ce que** chaque étage de mesure comporte :
■ au moins un émetteur (7) apte à émettre un faisceau lumineux au moins sensiblement parallèle à ladite base, et
■ au moins un récepteur (8) apte à recevoir ledit faisceau lumineux après réflexion sur ledit givre.

2. Sonde selon la revendication 1,
**caractérisée en ce que** lesdits émetteurs (7) sont du type diode électroluminescente.

3. Sonde selon l'une des revendications 1 ou 2,
**caractérisée en ce que** lesdits récepteurs (8) sont du type photodiode.

4. Sonde selon l'une des revendications 1 à 3,
**caractérisée en ce qu'**elle comporte un boîtier (1), qui est solidaire de ladite base (2) et qui enferme ladite pluralité d'étages de mesure superposés, et **en ce que**, au niveau de chacun desdits étages de mesure, ledit boîtier est pourvu d'une fenêtre (5) transparente pour ledit faisceau lumineux.

5. Sonde selon la revendication 4,
**caractérisée en ce que** la pluralité desdites fenêtres est formée par un hublot (5) commun à tous les étages de mesure.

6. Sonde selon l'une des revendications 4 ou 5,
**caractérisée en ce que** ledit boîtier (1) présente une forme oblongue.

7. Sonde selon l'une des revendications 4 à 6,
**caractérisée en ce qu'**elle comporte des moyens de chauffage (14, 15) aptes à faire fondre superficiellement l'accrétion de givre au voisinage de ladite sonde.

8. Dispositif permettant de déterminer l'épaisseur d'une accrétion de givre sur une surface,
**caractérisé en ce qu'**il comporte une pluralité de sondes telles que spécifiées sous l'une quelconque des revendications 1 à 7, lesdites sondes étant réparties sur ladite surface.

9. Dispositif selon la revendication 8, destiné à déterminer l'épaisseur d'une accrétion de givre se formant sur une surface aérodynamique soumise à un écoulement aérodynamique, ledit dispositif étant pourvu de sondes telles que spécifiées sous la revendication 4,
**caractérisé en ce que** lesdites fenêtres (5) des sondes sont dirigées transversalement audit écoulement aérodynamique.

10. Dispositif selon la revendication 9,
**caractérisé en ce qu'**il comporte au moins un ensemble de sondes disposées dans l'écoulement aérodynamique.

11. Dispositif selon la revendication 10,
**caractérisé en ce que** ledit ensemble de sondes entoure le bord d'attaque (16) de ladite surface aérodynamique.

12. Dispositif selon l'une des revendications 8 à 11,
**caractérisé en ce que** les bases (2) desdites sondes sont directement fixées sur ladite surface (S).

13. Dispositif selon l'une des revendications 8 à 11,
**caractérisé en ce que** les bases (2) desdites sondes sont fixées sur un support qui est collé de façon temporaire à ladite surface (S), qui est parallèle à cette dernière et qui ménage un espace intermédiaire (21) avec ladite surface (S).

## Claims

1. A probe for measuring the thickness of an accretion of frost (G) on a surface (S), in particular an aircraft aerodynamic surface, said probe being provided with a base (2) able to be applied to said surface (S),
**characterized:**
- **in that** it comprises a plurality of measurement stages (E1 to En) overlaid at least substantially orthogonally to said base (2); and
- **in that** each measurement stage comprises:
● at least one emitter (7) able to emit a light beam at least substantially parallel to said base, and
● at least one receiver (8) able to receive said light beam after reflection on said frost.

2. The probe as claimed in claim 1,
**characterized in that** said emitters (7) are of the light-emitting diode type.

3. The probe as claimed in one of claims 1 or 2,
**characterized in that** said receivers (8) are of the photodiode type.

4. The probe as claimed in one of claims 1 to 3,
**characterized in that** it comprises a casing (1), which is secured to said base (2) and which encloses said plurality of overlaid measurement stages, and **in that**, at the level of each of said measurement stages, said casing is provided with a transparent window (5) for said light beam.

5. The probe as claimed in claim 4,
**characterized in that** the plurality of said windows is formed by a porthole (5) common to all the measurement stages.

6. The probe as claimed in one of claims 4 or 5,
**characterized in that** said casing (1) presents an oblong shape.

7. The probe as claimed in one of claims 4 to 6,
**characterized in that** it comprises heating means (14, 15) able to superficially melt the accretion of frost in the vicinity of said probe.

8. A device making it possible to determine the thickness of an accretion of frost on a surface,
**characterized in that** it comprises a plurality of probes as specified under any one of claims 1 to 7, said probes being distributed over said surface.

9. The device as claimed in claim 8, intended to determine the thickness and accretion of frost forming on an aerodynamic surface subject to an aerodynamic flow, said device being provided with probes such as specified under claim 4,
**characterized in that** said windows (5) of the probes are directed transversely to said aerodynamic flow.

10. The device as claimed in claim 9, **characterized in that** it comprises at least one set of probes disposed in the aerodynamic flow.

11. The device as claimed in claim 10, **characterized in that** said set of probes surrounds the leading edge (16) of said aerodynamic surface.

12. The device as claimed in one of claims 8 to 11,
**characterized in that** the bases (2) of said probes are fixed directly to said surface (S).

13. The device as claimed in one of claims 8 to 11,
**characterized in that** the bases (2) of said probes are fixed to a support which is temporarily bonded to said surface (S), which is parallel to the latter and which leaves an intermediate space (21) with said surface (S).

## Patentansprüche

1. Fühler zum Messen der Dicke der Frostablagerung (G) auf einer Oberfläche (S), insbesondere einer aerodynamischen Fläche eines Luftfahrzeuges, wobei der Fühler mit einem zum Anbringen an der Oberfläche (S) geeigneten Boden (2) ausgestattet ist,
**dadurch gekennzeichnet:**
- **dass** er eine Vielzahl von Messstufen (E1 bis En) umfasst, die zumindest im Wesentlichen orthogonal zum Boden (2) übereinander liegen und
- **dass** jede Messstufe Folgendes umfasst:
● mindestens einen Sender (7), der geeignet ist, ein Lichtbündel zumindest im Wesentlichen parallel zu diesem Boden auszusenden und
● mindestens einen Empfänger (8), der geeignet ist, das Lichtbündel nach Reflektion an der Vereisung zu empfangen.

2. Fühler nach Anspruch 1,
**dadurch gekennzeichnet, dass** die Sender (7) vom LED-Typ sind.

3. Fühler nach einem der Ansprüche 1 oder 2,
**dadurch gekennzeichnet, dass** die Empfänger (8) vom Photodioden-Typ sind.

4. Fühler nach einem der Ansprüche 1 bis 3,
**dadurch gekennzeichnet, dass** er ein Gehäuse (1) umfasst, das fest mit dem Boden (2) verbunden ist und das die Vielzahl übereinanderliegender Messstufen umschließt und **dadurch**, dass das Gehäuse an jeder der Messstufen mit einem transparenten Fenster (5) für das Lichtbündel ausgestattet ist.

5. Fühler nach Anspruch 4,
**dadurch gekennzeichnet, dass** die Vielzahl der Fenster aus einer allen Messstufen gemeinsamen Sichtscheibe (5) gebildet ist.

6. Fühler nach einem der Ansprüche 4 oder 5,
**dadurch gekennzeichnet, dass** das Gehäuse (1) eine längliche Form aufweist.

7. Fühler nach einem der Ansprüche 4 bis 6,
**dadurch gekennzeichnet, dass** er Erhitzungsmittel (14, 15) umfasst, die geeignet sind, die Frostablagerung in der Nähe des Fühlers oberflächlich zum Schmelzen zu bringen.

8. Vorrichtung, die es ermöglicht, die Dicke der Frostablagerung auf einer Oberfläche zu bestimmen,
**dadurch gekennzeichnet, dass** sie eine Vielzahl von Fühlern wie die unter einem der Ansprüche 1 bis 7 spezifizierten umfasst, wobei die Fühler über die Oberfläche verteilt sind.

9. Vorrichtung nach Anspruch 8 zum Bestimmen der Dicke der Frostablagerung, die sich auf einer aerodynamischen Fläche bildet, die einer aerodynamischen Strömung unterworfen ist, wobei die Vorrichtung mit Fühlern wie den unter Anspruch 4 spezifizierten ausgestattet ist,
**dadurch gekennzeichnet, dass** die Fenster (5) der Fühler quer zu der aerodynamischen Strömung ausgerichtet sind.

10. Vorrichtung nach Anspruch 9,
**dadurch gekennzeichnet, dass** sie mindestens eine Gruppe von in der aerodynamischen Strömung angeordneten Fühlern umfasst.

11. Vorrichtung nach Anspruch 10,
**dadurch gekennzeichnet, dass** die Gruppe von Fühlern die Flügelvorderkante (16) der aerodynamischen Fläche umgibt.

12. Vorrichtung nach einem der Ansprüche 8 bis 11,
**dadurch gekennzeichnet, dass** die Böden (2) der Fühler direkt auf der Oberfläche (S) befestigt sind.

13. Vorrichtung nach einem der Ansprüche 8 bis 11,
**dadurch gekennzeichnet, dass** die Böden (2) der Fühler an einem Träger befestigt sind, der temporär mit der Oberfläche (S) verklebt ist, der parallel zur Letzteren verläuft und der mit der Oberfläche (S) einen Zwischenraum (21) bildet.
